# EUROPÄISCHE PATENTSCHRIFT

(11) **EP 1 247 613 B1**
(45) Veröffentlichungstag und Bekanntmachung des Hinweises auf die Patenterteilung: **17.12.2003**
(21) Anmeldenummer: 02006808.6
(22) Anmeldetag: 25.03.2002
(51) Int. Cl.: B23Q 15/24, B23Q 17/22, B23Q 5/36, B23Q 5/38, B23Q 5/40, B23Q 1/58

(54) **Impulsentkoppelter Transmissionsantrieb**
Drive system for a load in a machine, with a reaction part
Système d'actionnement d'une charge dans une machine, avec une pièce de réaction

(30) Priorität: 06.04.2001 DE 10117460
(43) Veröffentlichungstag der Anmeldung: 09.10.2002
(73) Patentinhaber: SIEMENS AKTIENGESELLSCHAFT, 80333 München (DE)
(72) Erfinder: Knorr, Markus, 81245 München (DE); Stoiber, Dietmar, 90763 Fürth (DE)

(56) Entgegenhaltungen:
- DE-A- 19 810 996
- DE-A- 19 826 587
- US-A- 4 201 935

## Beschreibung

An vielen Maschinen in industriellen Produktionsprozessen werden Werkstücke oder Werkzeuge bewegt. Die Bewegung erfolgt entlang fest vorgegebener Achsbahnen. Die Arbeitsgeschwindigkeit der Maschine hängt wesentlich von der Geschwindigkeit der Zustell- und Transportbewegungen ab. Im Sinne von hohen Maschinenproduktivitäten werden daher hohe Achsgeschwindigkeiten angestrebt.

In den meisten Fällen werden die Zustellbewegungen, von denen eine gewisse Präzision gefordert wird, von geregelten elektrischen Servoantrieben ausgeführt. Sofern es sich nicht um einen Direktantrieb handelt, wird das Drehmoment des Servomotors mit Hilfe von Transmissionselementen, wie z. B. Kugelrollspindeln, Zahnriemen oder Zahnstangen auf die linear zu bewegenden Maschinenschlitten übertragen. Derartige Antriebssysteme sind in der industriellen Technik weit verbreitet.

Hohe Geschwindigkeiten der Linearbewegungen werden zwangsläufig von hohen Beschleunigungen und hohem Ruck (Änderung der Beschleunigung je Zeiteinheit) begleitet. Insbesondere steigt der Ruck mit der Arbeitsgeschwindigkeit der Servoachse dramatisch an. Der Ruck regt die Maschinenstruktur zu Schwingungen an, die sich nachteilig auf die Präzision und die Konturgenauigkeit des Fertigungsprozesses auswirken. Häufig ist es dann notwendig, die Beschleunigung und die Achsgeschwindigkeit so weit zurückzunehmen, dass die kritischen Ruckwerte nicht überschritten werden. Die Begrenzung der Achsgeschwindigkeit wirkt sich allerdings negativ auf die Produktivität der Maschine aus. Es wäre daher wünschenswert, die Achsgeschwindikeit steigern zu können, ohne dadurch gleichzeitig Schwingungen in der Maschine anzuregen.

Wenn die Reaktionskräfte des Antriebsstranges die Maschine in Schwingungen versetzen, mit denen sich die angestrebte Präzision nicht mehr einhalten lässt, wird die Achsgeschwindigkeit zurückgefahren, oder die Maschine wird mit konstruktiven Maßnahmen mechanisch versteift. Wie bereits erwähnt, wirkt sich die Reduzierung der Achsgeschwindigkeit nachteilig auf die Produktivität aus und kann daher oftmals nicht akzeptiert werden. Die mechanische Versteifung der Maschine ist in vielen Fällen sehr kostspielig und stellt mitunter auch das eigentlich angestrebte Maschinenkonzept in Frage. Besonders bei Maschinen, die eine gewisse mechanische Ausladung übersteigen, ist eine mechanische Versteifung kaum möglich.

Die DE-A-198 10 996 die dem nächstkommenden Stand der Technik entspricht, beschreibt ein Verfahren, mit dessen Hilfe die Rückstoßimpulse aus direktgetriebenen Servoachsen vom Unterbau der Maschine ferngehalten werden können. Es wird dort ausgeführt, dass ein Direktantriebssystem immer zwei Kräfte erzeugt, nämlich die eigentliche erwünschte Schubkraft, die den Maschinenschlitten vorantreibt, und die Reaktionskraft, die als Folge der Schubkraft entsteht. Beide Kräfte - die Vortriebskraft und die Reaktionskraft - treten stets exakt zeitgleich zueinander auf, sind stets von gleichem Betrag und zeigen stets in zueinander entgegengesetzte Wirkrichtungen. Hingegen können beide Kräfte an voneinander unterschiedlichen Orten bzw. Maschinenteilen wirksam werden. Damit ist das physikalische Grundgesetz der Impulserhaltung exakt erfüllt. Vom Standpunkt des Maschinenbetreibers ist nur eine Kraft erwünscht, nämlich die Vortriebskraft, die einen Maschinenschlitten entlang der Bahnkontur beschleunigt. Die zweite Kraft, die Reaktionskraft, ist auf Grund der Impulserhaltung zwar unvermeidlich, sie wird aber aus der Sicht des Maschinenbetreibers nicht benötigt und ist daher "Abfall". Die technische Lehre aus der DE 198 10 996 ist ein Verfahren, mit dessen Hilfe die aus Sicht des Maschinenbetreibers unerwünschte Reaktionskraft aus Direktantrieben abgefangen werden kann, bevor sie den Maschinenunterbau erreicht. Da das dort beschriebene Verfahren keinerlei Änderung der Regelungsstrukturen erforderlich macht, ist es streng auf Direktantriebe wie Linearmotoren beschränkt, die ohne mechanische Transmission oder Umlenkungen auskommen.

Demgegenüber liegt der Erfindung die Aufgabe zugrunde, Erschütterungen, die als Folge von Reaktionskräften von schnelllaufenden Achsantrieben entstehen, vom Unterbau der Maschine fernzuhalten.

Die Lösung dieser Aufgabe erfolgt durch einen Antrieb gemäß Anspruch 1; die abhängigen Ansprüche betreffen vorteilhafte Weiterentwicklungen der Erfindung.

Die vorliegende Erfindung ermöglicht die Entkopplung der Reaktionskraft auch bei Antriebssystemen, die keine Direktantriebe sind. Es wird dadurch möglich, die Rückstoßimpulse auch bei den weit verbreiteten Spindel-, Riemen- und Zahnstangenantrieben vom Maschinenunterbau zu entkoppeln. Hierzu sind neben den mechanischen Elementen zur Impulsentkopplung auch Änderungen der Regelungsstruktur notwendig.

Ausführungsbeispiele der Erfindung sind in den beigefügten Zeichnungen dargestellt. Es zeigen:
- FIG 1: einen Zahnstangenantrieb mit einem Reaktionsschlitten und
- FIG 2: einen Kugelrollspindelantrieb mit einem Reaktionsschlitten.

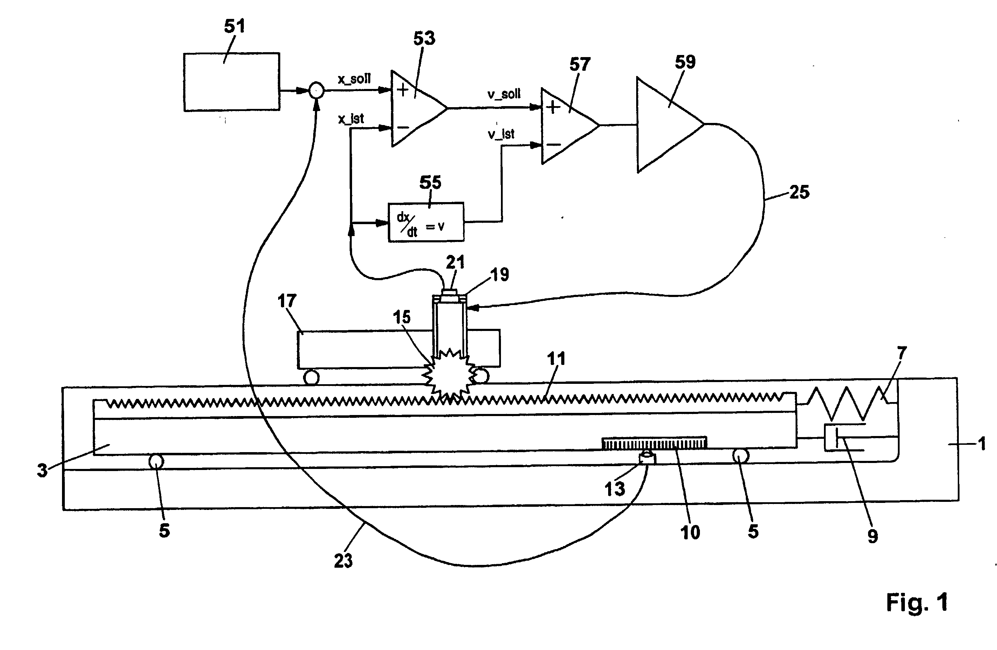

Zur Entkopplung des Rückstoßimpulses ist das maschinenbettseitige Widerlager des Transmissionsantriebes nicht, wie dem Stand der Technik entsprechend, möglichst hart an einem Maschinenbett 1 verankert, sondern es wird vielmehr definiert weich aufgehängt. Dazu dient ein zusätzlicher Reaktionsschlitten 3, der gegenüber dem Maschinenbett 1 beweglich ist und der die Reaktionskraft des Antriebsstranges aufnimmt. Beispielsweise ist eine in Fig. 1 dargestellte Zahnstange 11 auf einem solchen Reaktionsschlitten 3 befestigt. Der Reaktionsschlitten 3 ist über eine Feder 7 und einen Dämpfer 9 elastisch mit dem Maschinenbett 1 verbunden. Ein Servomotor 18 beschleunigt einen Maschinenschlitten 17, der eine Nutzlast wie ein Werkzeug oder ein Werkstück (nicht dargestellt) trägt, wobei die elastisch aufgehängte Reaktionsseite des Antriebes eine entsprechende Gegenbewegung ausführt. Der Rückstoß aus dem Antrieb wird folglich in den Bewegungsimpuls der Reaktionsseite (in FIG 1 ist dies die Zahnstange 11) gelenkt. Allerdings führt die Gegenbewegung zu einer zusätzlichen Positionsverschiebung zwischen dem Reaktionsschlitten 3 und dem Maschinenbett 1. Ziel der Bewegungsführung ist es aber, die Position zwischen dem Maschinenschlitten 17 und dem Maschinenbett 1 möglichst genau zu regeln. Aus diesem Grunde wird die zusätzliche Positionsabweichung zwischen dem Reaktionsschlitten 3 und dem Maschinenbett 1 gemessen und der Positionssteuerung als Korrekturwert zugeleitet. Hierzu ist ein Maßstab 10 am Maschinenbett angebracht, der die Auslenkung des Reaktionsschlittens 3 gegenüber dem Maschinenbett misst und ein Korrektursignal zu Verfügung stellt.

Die Reaktionsseite des Antriebsstranges hat eine bestimmte Masse und sie ist elastisch am Maschinenbett verankert. Sie bildet somit ein gegenüber dem Maschinenbett 1 schwingfähiges System. Ein Dämpfer 9, der der Feder zugeordnet ist, hat die Aufgabe, die Ausbildung der Resonanz zu verhindern und angeregte Schwingungen schnell zum Abklingen zu bringen.

Bekanntlich können Servoantriebssysteme den Sollwertvorgaben der Position - je nach Dynamik - bis in einen Frequenzbereich von einigen 10 Hz folgen. Sind in den Bahnkurven höherfrequente Anteile enthalten als sie das Antriebssystem darstellen kann, werden diese nicht mehr ausgeführt, so dass es zu entsprechenden Positionsfehlern kommt. Da das Korrektursignal aus der Ausgleichsbewegung in die Sollwertvorgabe eingekoppelt wird, muss es vom Antriebssystem verarbeitet werden können. Es empfiehlt sich deshalb dafür zu sorgen, dass die Frequenzen des Korrektursignales so tief liegen, dass sie vom Antriebssystem noch dargestellt werden können. Dies sollte aber nicht etwa durch eine Filterung des Korrektursignales geschehen, weil die damit verbundenen Amplituden- und Phasenverluste direkt einen Positionierungsfehler verursachen würden. Vielmehr sollte mit physikalischen Mitteln dafür gesorgt werden, dass die Schwingfrequenz der Ausgleichsbewegung keine höherfrequenten Anteile enthält. Dazu ist es zweckmäßig, die Eigenfrequenz der Antriebsreaktionsseite gegenüber dem Maschinenbett entsprechend tief abzustimmen. Im Beispiel der FIG 1 bedeutet dies, dass die bewegliche gelagerte Zahnstange bzw. der Reaktionsschlitten 3 eine entsprechend große Masse haben sollte.

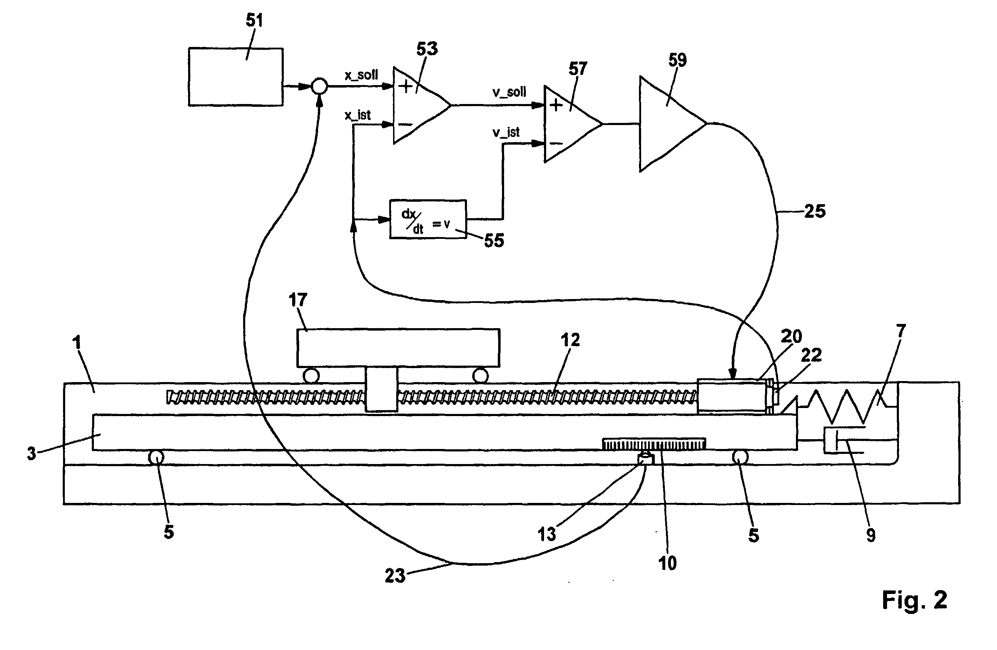

In der FIG 2 ist ein Antriebsstrang mit Kugelrollspindel und entsprechender elastischer Aufhängung der Antriebsreaktionsseite dargestellt. Ein Servomotor 20 befindet sich auf einem eigenen Reaktionsschlitten 3 und kann gegenüber dem Maschinenbett Ausgleichsbewegungen durchführen.

Sinngemäß das gleiche Konzept lässt sich auch mit einem Zahnriemenantrieb als Antriebsstrang verwirklichen. Hierzu müssen die Antriebs- und die Umlenkrolle gemeinsam auf einem Ausgleichsschlitten montiert werden.

Zur Positionsmessung in den bisher angeführten Beispielen wird ein an die Servomotorwelle angebauter Drehwinkelgeber 21, 22 benutzt. Über die Umrechnung des Drehwinkels unter Berücksichtigung des mechanischen Übersetzungsverhältnisses der Transmission lässt sich dadurch jederzeit die Relativposition zwischen dem Maschinenschlitten 17 und dem Antriebselement bestimmen. Wenn eine äußerst exakte Messung der Position erforderlich ist, ist es auch möglich, einen zusätzlichen Linearmaßstab zwischen dem Reaktionsschlitten 3 und dem Maschinenschlitten 17 anzubringen.

Wenn die Aufhängung und die Eigendynamik des Reaktionsschlittens gut definiert und zeitlich konstant sind, ist es auch möglich, die Übertragungsfunktion des Reaktionsschlittens 3 im Regler zu berücksichtigen und das Drehmoment des Servomotors so zu führen, dass die Dämpfung des Reaktionsschlittens unterstützt wird.

Es kann auch günstig sein, das Korrektursignal des Korrekturmaßstabes 10, der die Auslenkung des Reaktionsschlittens gegenüber dem Maschinenbett 1 misst, nicht nur als Korrekturwert für die Positionssollwerte einzuschleifen, sondern er kann auch als Korrekturwert für die Positionsistwerte verwendet werden. Darüber hinaus können aus dem Korrektursignal auch die Geschwindigkeit und die Beschleunigung abgeleitet werden. Die so berechneten dynamischen Korrekturwerte können an entsprechender Stelle in den Regelkreis eingeführt werden. Die Strategie zur Auswertung der zusätzlichen dynamischen Systeminformationen ist unter den Begriffen der Vorsteuerung und der Zustandsregelung allgemein bekannt und Stand der Technik.

Unter Zuhilfenahme der Zustandsregelung ist es auch möglich, nicht nur die Information aus dem Korrekturmaßstab 10, der die Auslenkung des Reaktionsschlittens 3 gegenüber dem Maschinenbett 1 misst, zu verwenden, sondern zusätzlich die Position zwischen dem Maschinenbett 1 und dem Maschinenschlitten 17 direkt über einen weiteren Linearmaßstab zu messen. Wenn durch eine entsprechend ausgewogene Regelungsstrategie und eine schnelle Signalverarbeitung eine ausreichende Dämpfung des Reaktionsschlittens 3 erreicht wird, kann sogar auf den ursprünglich verwendeten Korrekturmaßstab 10 verzichtet werden und nur das direkte Meßsystem zur Ermittlung der Korrektursignale herangezogen werden. Allen Strategien aber ist gemeinsam, dass der Geschwindigkeitsregelkreis, der in den Abbildungen als zweite Differenzverstärkerstufe dargestellt ist, sein Istgeschwindigkeitssignal im wesentlichen aus dem Drehgeber 21, 22 der Motorwelle bezieht.

Unter Umständen ist die Anbringung einer zusätzlicher Führungselemennte zur Lagerung eines Reaktionsschlittens ziemlich aufwendig. Es ist aber grundsätzlich auch möglich, den Reaktionsschlitten auf mechanische Elemente aufzusetzen, die durch ihre Verformung eine Beweglichkeit des Reaktionsschlittens ermöglichen. Zum Beispiel könnten Zungen aus Metallstreifen ein geeignetes Lagerungselement 5 bilden.

## Patentansprüche

1. Antrieb für eine Nutzlast in einer Maschine mit einem Motor (19, 20) und einem Transmissionszug aus mindestens einem ersten und einem zweiten Transmissionselement (15, 11; 12), die zur Bewegung der Nutzlast miteinander in Eingriff stehen, wobei das erste Transmissionselement mit einem Maschinenschlitten (17) verbunden ist, das zweite Transmissionselement mit einem Reaktionsschlitten (3) und der Reaktionsschlitten (3) an einem Maschinenbett (1) beweglich gelagert ist und der Antrieb durch eine Steuerung geregelt wird, die eine erste Positionsmesseinrichtung (21, 22) zur Ermittlung der Lage des Maschinenschlittens (17) in Bezug auf den Reaktionsschlitten (3) und eine zweite Positionsmesseinrichtung (10, 13) zur Ermittlung der Lage des Reaktionsschlittens (3) in Bezug auf das Maschinenbett (1) umfasst und vorgegebene Soll-Positionsdaten für die Nutzlast mit Ist-Positionsdaten für den Maschinenschlitten und den Reaktionsschlitten in Bezug auf das Maschinenbett korrigiert.

2. Antrieb nach Anspruch 1, **dadurch gekenn-zeichnet, dass** eine der Positionsmesseinrichtungen (21, 22) einen Drehgeber eines Servomotors aufweist.

3. Antrieb nach Anspruch 1 oder 2, **dadurch gekennzeichnet, dass** der Reaktionsschlitten (3) federnd am Maschinenbett (1) gelagert ist und ein Regelsystem zur Positionsregelung der Nutzlast vorgesehen ist, wobei die Eigenfrequenz des Reaktionsschlittens bei einer Schwingung in Bewegungsrichtung geringer ist als die Regelfrequenz des Regelsystems.

4. Antrieb nach Anspruch 3, **dadurch gekenn-zeichnet, dass** die Eigenschwingfrequenz nicht mehr als 400 Hz beträgt, vorzugsweise weniger als 100 Hz, insbesondere weniger als 30 Hz.

5. Antrieb nach einem der Ansprüche 1 bis 4, **dadurch gekennzeichnet, dass** die Transmissionselemente Ritzel und Zahnstange, Spindel und Spindelmutter, Riemenscheibe und Treibriemen oder Ritzel und Antriebskette aufweisen.

## Claims

1. Drive for a useful load in a machine, comprising a motor (19, 20) and a transmission assembly having at least one first transmission element and a second transmission element (15, 11; 12) which are mutually engaged in order to move the useful load, whereby the first transmission element is connected to a machine carriage (17), the second transmission element is connected to a reaction carriage (3) and the reaction carriage (3) is movably supported on a machine base (1), and the drive is controlled by a controller which comprises a first position measurement device (21, 22) for determining the position of the machine carriage (17) relative to the reaction carriage (3) and a second position measurement device (10, 13) for determining the position of the reaction carriage (3) relative to the machine bed (1) and corrects predefined position set points for the useful load by using values for the actual position for the machine carriage and the reaction carriage relative to the machine bed.

2. Drive according to Claim 1, **characterized in that** one of the position measurement devices (21, 22) includes an angular encoder of a servo motor.

3. Drive according to Claim 1 or 2, **characterized in that** the reaction carriage (3) is resiliently supported on the machine bed (1) and a control system is provided for controlling the position of the useful load, whereby the characteristic frequency of the reaction carriage when oscillating in the linear direction is smaller than the control frequency of the control system.

4. Drive according to Claim 3, **characterized in that** the characteristic frequency does not exceed 400 Hz, is preferably less than 100 Hz, in particular less than 30 Hz.

5. Drive according to one of Claims 1 to 4, **characterized in that** the transmission elements comprise pinion and toothed rod, spindle and spindle nut, belt pulley and drive belt, or pinion and drive chain.

## Revendications

1. Système d'entraînement pour une charge utile dans une machine, comprenant un moteur (19, 20) et un train de transmission constitué d'au moins un premier et un second élément de transmission (15, 11 ; 12) qui sont en prise réciproque pour déplacer la charge utile, le premier élément de transmission étant relié à un chariot de machine (17), le second élément de transmission à un chariot de réaction (3), et le chariot de réaction (3) étant monté mobile sur un bâti (1) de la machine, et le système d'entraînement étant régulé par une commande qui comprend un premier dispositif de mesure de position (21, 22) pour déterminer la position du chariot de machine (17) par rapport au chariot de réaction (3) et un second dispositif de mesure de position (10, 13) pour déterminer la position du chariot de réaction (3) par rapport au bâti (1) de la machine, et qui corrige des données de position de consigne prescrites pour la charge utile avec des données de position réelles pour le chariot de machine et le chariot de réaction par rapport bâti de la machine.

2. Système d'entraînement selon la revendication 1, **caractérisé en ce que** l'un des dispositifs de mesure de position (21, 22) comprend un capteur de rotation d'un moteur asservi.

3. Système d'entraînement selon la revendication 1 ou 2, **caractérisé en ce que** le chariot de réaction (3) est monté de manière élastique sur le bâti (1) de la machine, et qu'il est prévu un système de régulation pour la régulation de position de la charge utile, la fréquence propre du chariot de réaction pour une vibration dans la direction de mouvement, étant inférieure à la fréquence de régulation du système de régulation.

4. Système d'entraînement selon la revendication 3, **caractérisé en ce que** la fréquence propre de vibration ne dépasse pas une valeur de 400 Hz, et est de préférence inférieure à 100 Hz, et notamment inférieure à 30 Hz.

5. Système d'entraînement, selon l'une des revendications 1 à 4, **caractérisé en ce que** les éléments de transmission comprennent un ensemble pignon et crémaillère, vis et écrou de vis, poulie et courroie d'entraînement ou pignon et chaîne d'entraînement.
